(19) Europäisches Patentamt
European Patent Office
Office européen des brevets

(11) **EP 4 592 973 A1**

(12) **EUROPEAN PATENT APPLICATION**

(43) Date of publication:
**30.07.2025 Bulletin 2025/31**

(21) Application number: **24305148.9**

(22) Date of filing: **29.01.2024**

(51) International Patent Classification (IPC):
*G06V 10/82* (2022.01)    *G06V 40/40* (2022.01)

(52) Cooperative Patent Classification (CPC):
**G06V 10/82; G06V 40/40**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **THALES DIS FRANCE SAS**
**92190 Meudon (FR)**

(72) Inventors:
• **ANGHELONE, David**
  **74300 Cluses (FR)**
• **LANNES, Sarah**
  **91400 Orsay (FR)**

(74) Representative: **Quintero Romero, Manuel**
**Thales Dis France SAS**
**Intellectual Property Department**
**6, rue de la Verrerie**
**92190 Meudon (FR)**

(54) **LIVENESS DETERMINATION BASED ON THERMAL AND VISIBLE DOMAIN IMAGES**

(57)    The invention provides a presentation attack detection method comprising:
- receiving (901) a thermal image and receiving (902) an image in the visible domain;
- determining (903) whether a face of a target person is detected in the thermal image or not, and whether a face is detected in the image in the visible domain or not;
- if the face of the target person is detected in both the thermal image and the image in the visible domain, determining (915) a first classification indicating whether the target person is genuine or not, based on a comparison (911; 913) between a the image in the visible domain and the thermal image;
- determining (916) a final decision representative of the genuineness of the target person, based at least on the determined first category.

[FIG. 8]

EP 4 592 973 A1

**Description**

## TECHNICAL FIELD

This invention is related to the field of face processing, and more particularly, to face presentation attack detection, which aims at determining whether a face is genuine, from a target person at a point of capture, or spoof/fake therefore corresponding to an attack.

## BACKGROUND OF THE INVENTION

More and more applications and services implement a prior step of Face Recognition, FR, to ensure that a user is authorized to use a resource such as a service/application.

This is the case for example in the domain of telecommunications, when unlocking a phone for example, when accessing to a physical place, for example in airports, in biometric systems for identity verification or in digital identification, for example for banking services.

In the above-mentioned services, face recognition is becoming one of the preferred biometric modality.

Once the face of a user is captured, image frames are generally processed and compared with images labelled with user identities (stored in a database or integrated in an identity document such as a passport), so as to infer the identity of a user.

To access services/applications of the genuine person, attackers may implement Presentation Attacks, noted PAs hereafter. PAs may consist in presenting face spoof to the recognition system.

To counteract these PAs, presentation attack detection methods have been developed and are applied prior to face recognition, to ensure that the genuine person that is subjected to recognition is genuine, and not spoof/attack.

Some presentation attack detection methods or systems are called active, where they require the target person to perform a series of one or several instructions, requesting some type of cooperative behaviour, such as blinking of the eyes, mouth/lip movement and/or turning of the head.

However, active methods/systems have the drawback to be obtrusive, which is a problem in security applications where a target person needs to be recognized without noticing it. Also, active methods may require a series of instructions that is not easy to explain to the user, which may wrongly understand some of the instructions.

In contrast, passive presentation attack detection does not require any cooperation from the target person, so are unobtrusive, and processes images or frames that are acquired by a capture device, such as a camera.

Modern methods of facial PA are creating issues for FR systems and are therefore a major concern of vulnerability for services/applications relying on them.

Indeed, modern methods of facial PA benefit from the ubiquity and high quality of instruments, named PAIs for Presentation Attack Instruments hereafter, which include:

- pictures, either printed or cut-out;
- more complex PAIs such as video-replay or folded paper masks;
- expensive and advanced PAIs such as silicone or latex full-face masks.

Current presentation attack detection methods are adapted to the sensor that is available in each FR system.

Most presentation attack detection methods must rely on standard Red Green Blue, RGB, cameras only, or on Near InfraRed, NIR, cameras. It is to be noted that infrared spectrum includes four spectral bands: NIR, "short-wave infrared" SWIR, "medium-wave infrared" MWIR and "long-wave infrared" LWIR. Both MWIR and LWIR are also known as "thermal".

However, presentation attack detection methods based on RGB cameras lack efficiency in detecting PAs that are based on well-crafted video replay attacks.

Other methods are implemented in FR systems comprises Time of Flight cameras or structured light. These sensors have the benefit of adding three-dimensional, 3D, information to analyse, making the detection of PAIs such as pictures, much easier.

However, these sensors may be costly, and they also lose their interest when the target person is distant. They are also difficult to combine with passive presentation attack detection methods.

The publication "A Study on Presentation Attack Detection in Thermal Infrared", Kowalski, Military University of Technology, Sensors 20(14):3988, July 2020, proposes a method based on the measure and visualization of the facial temperature for PA detection. This relies on a two-step deep learning based method, including head detector followed by a deep learning classifier.

However, this method encounters limitations when it comes to more sophisticated PA, such as PAs that are based on silicon or latex full facial masks.

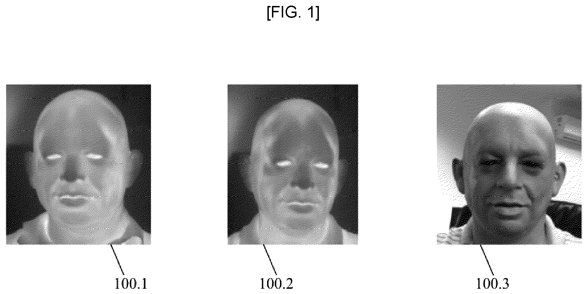

For example, referring to figure 1, there are shown three pictures of a person wearing a full latex facial mask as PAI. A first picture 100.1 is a thermal image acquired by a thermal infrared camera, such as the one used in the publication of the prior art identified above. In the first picture 100.1, the target person starts wearing the mask right before the first image 100.1 is acquired, which means that the mask is cold and the resultant thermal spectrum is not very contrasted: a thermally uniform shape and temperature is obtained, which seems fake. The first picture 100.1 can therefore be determined as spoof or fake by presentation attack detection methods that are based on thermal images, such as the one described in the above reference publication.

However, on a second image 100.2, there is shown the same target person with the full latex facial mask, but with a warm mask, that is worn by the target person well before (more than a given amount of time before) the second image 100.2 is taken by the thermal infrared camera. A third image 100.3 shows a picture of the same target person acquired by a camera acquiring pictures in the visible domain.

As it can be observed, the second image 100.2 comprises more variations of temperature and is less thermally uniform. Therefore, a PA detection method using a thermal camera, such as the one described in the above publication, may fail to detect that the face of the target person is spoof, when processing the second image 100.2.

Therefore, there is a need for a presentation attack detection method that can detect several types of PAIs, including the most sophisticated types of PAIs such as full latex of silicon face masks, including when such masks have been worn during a given amount of time before the PAD method is implemented It is also preferable that the presentation attack detection method can be passive, and can be applied to distant target persons.

## SUMMARY OF THE INVENTION

The present invention provides a solution for the aforementioned problems by a presentation attack detection method according to claim 1, a computer program according to claim 13, and a presentation attack detection device according to claim 14. In dependent claims, preferred embodiments of the invention are defined.

In a first inventive aspect, the invention provides a presentation attack detection method comprising:

- receiving at least one thermal image from a thermal camera;
- receiving at least one image in the visible domain from a camera different from the thermal camera;
- determining whether a face of a target person is detected in the thermal image or not, and whether a face of the target person is detected in the image in the visible domain or not;
- if the face of the target person is detected in both the thermal image and the image in the visible domain, determining a first classification indicating whether the target person is genuine or not (and is therefore spoof, indicating an attack), based on at least one comparison between the image in the visible domain and the thermal image;
- determining a final decision representative of the genuineness of the target person, based at least on the determined first classification.

Each of the images in the visible domain and thermal domain are representative of an identity of the target person. The invention allows to compare identities of the target user in a thermal image and in a visible domain image, which allows to detect presentation attacks that are based on full 3D mask, such as in silicon and latex, even when they are of high quality and worn by the attacker for a long period. Indeed, the real identity of the attacker will radiate and "leak" through the mask, which can be detected in the thermal image, whereas the image in the visible domain represents the identity of the mask. A discrepancy between the identities indicates that the target person is spoof and the final decision may indicate an attack. Therefore, the invention allows to detect PA based on complex and expensive PAIs.

According to some embodiments, the method further comprises a domain translation of the thermal image to obtain a synthesized image in the visible domain, and the first classification is obtained based at least on a comparison between the image in the visible domain and the synthesized image.

This allows to facilitate the comparison as it is performed on images in the same visible domain. Again, a discrepancy between the identities detected in the synthesized image and in the visible domain image indicates that the target person is spoof and the final decision may indicate an attack. Therefore, the invention allows to detect PA based on complex and expensive PAIs.

In complement, determining the first classification may comprise:

- evaluating a first similarity score based on a first comparison between the image in the visible domain and the thermal image;
- evaluating a second similarity score based on a second comparison between the image in the visible domain and the synthesized image;
- determining the first category based on the first similarity score and the second similarity score.

Evaluating a first score based on cross-domain identity comparison and a second score based on the same domain identity comparison, makes the determination of the first classification more accurate and robust to different situations. For example, the heat radiated by a genuine person varies between a situation where the genuine just made a physical effort, and a situation where the genuine person is at rest. Therefore, the method allows detection of high quality PAIs, including realistic full 3D masks, in many different situations.

Alternatively or in complement, the method may further comprise determining a second classification indicating whether the target person is genuine or not based on the synthesized image in the visible domain, and the final decision may be further based on the second category.

The second classification may be determined by the classification module referenced 222 and described in what follows. This allows to integrate successive face detection, domain translation and cross spectral identity comparison, which allows to detect a large panel of PAIs, including full face mask in latex or silicon, because of the detection of heat emission disturbance. Indeed, the image synthesized in the second spectral domain highlights relevant information revealing/disproving if target person is genuine or not. As the invention relies on several classifications grouped in a final decision, the method is robust to various PAIs.

In complement, the method may further comprise performing a first canonical face alignment of the image in the visible domain to obtain an aligned image in the visible domain and performing a second canonical face alignment on the thermal image to obtain an aligned thermal image, and the first classification is obtained by at least one comparison between the aligned thermal image and the aligned image in the visible domain.

This enables to avoid requesting the target person to be precisely positioned in front of the thermal camera and of the other camera, and is therefore compatible with a passive presentation attack detection method. It also facilitates the comparison between the image in the visible domain and the thermal image.

In complement, the first canonical face alignment may be based on at least one facial landmark of the face of the target person in the image in the visible domain and the second canonical face alignment may be based on at least one facial landmark of the face of the target person in the thermal image. Therefore, the facial landmarks are used for canonical face alignments, which facilitates the comparisons between the aligned images.

According to some embodiments, the domain translation may be performed by applying a model, the model being arranged for determining an image in the visible domain for a thermal image received as input.

The model is described hereafter as the fourth model implemented by the domain translation module. The model may be obtained by machine learning, which allows to increase the accuracy associated with the domain translation operation. The model may be a generative model for example. Alternatively, the model may be a diffusion model.

In complement, the model may be arranged to perform super resolution to receive thermal images with a first resolution as input, and to output an image in the visible domain with a second resolution being higher than the first resolution.

This enables to process low resolution thermal images, which makes the invention compatible with low-cost thermal cameras and/or which allows the target person to be positioned remotely from the thermal camera. Performing the domain translation at different resolution is synonymous to being deployable in the real world as it does not require people to stand still at a specific distance for example.

In complement, the model may have an encoder-decoder structure based on a pyramidal architecture. This allows a multi-scale analysis to generate a high-resolution image in the visible domain. The accuracy associated with the determination of the first classification is then increased.

In complement, the method may further comprise a preliminary step of training the model using a generative adversarial network, wherein the generative model is trained by a discriminator, using at least one adversarial loss function. This enables to generate realistic synthesized images in the visible domain.

In complement, the model may be trained by supervised learning on a set of training data comprising thermal images having several first resolutions associated with reference images in the visible domain having a second resolution, the second resolution being higher than the first resolutions.

This enables to generate images in the visible domain that are globally realistic, and that are also realistic for specific parts of the face, such as parts that have biometrical significance.

According to some embodiments, the method may further comprise, if the face of the target person is detected in the thermal image, determining a third classification indicating whether the target person is genuine or not by applying a model to the thermal image, the model being arranged to determine the third classification when receiving an input thermal image, and the final decision may be further based on the third classification.

The third category may be determined by the thermal domain classification module described in what follows, based on the seventh model. This allows to detect other types of PAIs such as 3D masks and video replay attacks for example.

According to some embodiments, the method may further comprise, if the face of the target person is detected in the image in the visible domain, determining a fourth classification indicating whether the target person is genuine or not by applying a model to the image in the visible domain, the model being arranged to determine the fourth classification when receiving an input image in the visible domain, and the final decision may be further based on the fourth classification.

The fourth classification may be determined by the visible domain classification module described in what follows, based on the eighth model. This allows to detect other types of PAIs such as low-quality masks, with poor skin texture for example.

A second aspect of the invention concerns a computer program comprising instructions arranged for implementing the method according to the first aspect of the invention, when said instructions are executed by a processor.

A third aspect of the invention concerns presentation attack detection device comprising:

- a first receiving interface arranged for receiving at least one thermal image from a thermal camera;
- a second receiving interface arranged for receiving at least one image in the visible domain from a camera different from the thermal camera;
- a face detection module configured to determine whether a face of a target person is detected in the thermal image or not, and whether a face of the target person is detected in the image in the visible domain or not;
- a comparison module configured to, if the face of the target person is detected in both the thermal image and the image in the visible domain, determine a first classification indicating whether the target person is genuine or not, based on at least one comparison between the image in the visible domain and the thermal image;
- a decision module configured to determine a final decision representative of the genuineness of the target person, based on the determined first classification.

All the features described in this specification (including the claims, description and drawings) and/or all the steps of the described method can be combined in any combination, with the exception of combinations of such mutually exclusive features and/or steps.

## DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.

Figure 1     This figure shows thermal and visible images of a target person wearing a Presentation Attack Instrument such as a full facial mask.

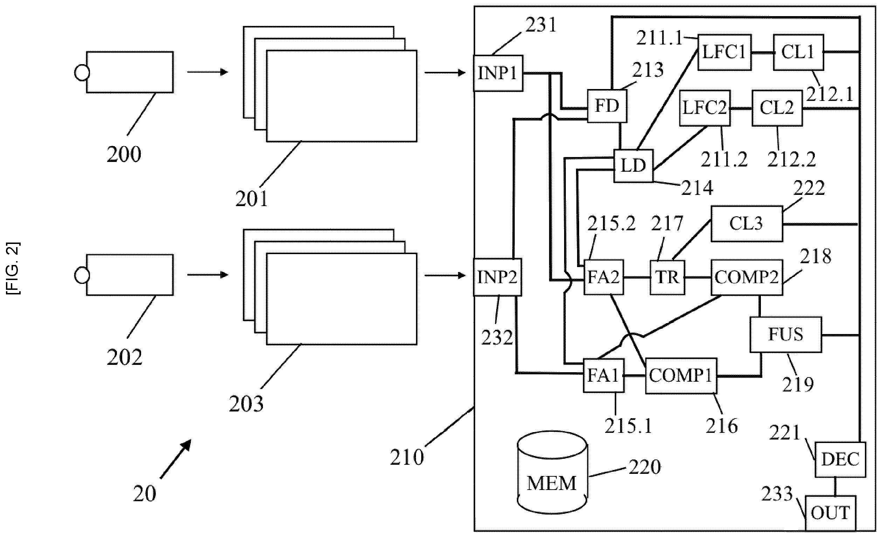

Figure 2     This figure illustrates a presentation attack detection system according to some embodiments of the invention.

Figure 3     This figure depicts a domain translation module according to some embodiments of the invention.

Figure 4     This figure depicts a structure of a discriminator of a Generative Adversarial Network used to train a generative model for a domain translation module according to some embodiments of the invention.

Figure 5     This figure shows thermal images of a presentation attack based on two-dimensional instruments.

Figure 6     This figure shows thermal images of a presentation attack based on a facial mask.

Figure 7     This figure depicts thermal images of a presentation attack based on a three-dimensional latex or silicon mask that has been worn during a long period by an attacker.

Figure 8     This figure is a diagram showing steps of a presentation attack detection method according to some embodiments of the invention.

## DETAILED DESCRIPTION OF THE INVENTION

As it will be appreciated by one skilled in the art, aspects of the present invention may be embodied as a presentation attack detection, a computer program, or a presentation attack detection device 210.

**Figure 1** shows a system 20 for presentation attack detection according to some embodiments of the invention. The system comprises a first frame capture device 200 such as a camera or a video camera, arranged to acquire at least one thermal image 201, a second frame capture device 202 such as a camera or a video camera, arranged to acquire at least one image 203 in the visible domain and a presentation attack detection device 210. The first frame capture device 200 is a thermal camera 200 and the second frame capture device 202 may be a Red-Green-Blue, RGB, camera 202, according to the invention.

As explained previously, a thermal image 201 is an image in the MWIR or LWIR spectral domain. The thermal camera 200 may acquire a first sequence of thermal images 201, at a first frequency. The same applies to the RGB camera 202, which can acquire a second sequence of images 203 in the visible domain at a second frequency, being equal to the first frequency or being different from the first frequency.

For example, when the thermal images 201 and the RGB images 203 are video frames, the first and second frequencies can be above one frame per second, fps, such as 24 frames per second for example. Alternatively, the thermal camera 200 is arranged to acquire thermal images 201 at a fixed first frequency that is less than 1 fps, or is arranged to acquire thermal images 201 when triggered by an event, for example when movement is detected. Also alternatively, the RGB camera 202 is arranged to acquire RGB images 203 at a fixed second frequency that is less than 1 fps, or is arranged to acquire RGB images 203 when triggered by an event, for example when movement is detected.

The thermal camera 200 and the RGB camera 202 are respectively arranged to acquire thermal images representing a scene in a first field of view of the thermal camera and to acquire RGB images in a second field of view of the RGB camera, the first and second fields of view being static or dynamic. According to the invention, the first and second fields of view are arranged so that the thermal camera 200 and the RGB camera 202 are able to acquire images of a common scene, such as a scene comprising the face of a target person for example.

No restriction is attached to the resolution of the thermal images 201 and of the RGB images 203. The resolution depends on the sensitivity and the format of the sensor of the thermal camera 200 and of the RGB camera 202.

The thermal camera 200 and the RGB camera 202 can be installed at an end user site, which can be at a building entrance, in front of a door, at a security gate of an airport or any other physical location. As explained above, the scene that is represented in at least some of the thermal images 201 of the first sequence and in at least some of the RGB images 203 of the second sequence, may represent a face of a target person.

As it will be understood from what follows, some embodiments of the invention allows that the presentation attack detection device 210 is able to process thermal images 201 and RGB images 203 for a wide range of distances between the target person and the cameras 200 and 202, and not only for a fixed distance where the target person has to be precisely positioned in front of the thermal camera 200 and in front of the RGB camera 202. This allows to use the presentation attack detection system 20 in passive applications, which require no active cooperation from the target person.

The presentation attack detection device 210 may comprise a first input interface 231 that is arranged for receiving a thermal image 201 from the thermal camera 200, or the first sequence of thermal images 201 from the thermal camera 200. The presentation attack detection device 210 further comprises a second input interface 232 that is arranged for receiving an image 203 in the visible domain, or the second sequence of images 203 in the visible domain, from the RGB camera 202.

No restriction is attached to the presentation attack detection device 210, which can be any device comprising processing capabilities, or a processor, and a non-transitory memory. The presentation attack detection device 210 may for example be incorporated into a server, desktop computer, smart tablet, smart phone, mobile internet device, personal digital assistant, wearable device, image capture device or any combination thereof. The presentation attack detection device 210 comprises fixed-functionality hardware logic, configurable logic, logic instructions, etc., or any combination thereof.

In addition, no restriction is attached to a first communication link between the thermal camera 200 and the presentation attack detection device 210, on which the thermal images 201 are transmitted, and to a second communication link between the RGB camera 202 and the presentation attack detection device 210, on which the images 203 in the visible domain are transmitted. The first and second communication links can for example be wireless links, or wired links. For example, wired protocols may include RS-232, RS-422, RS-485, I2C, SPI, IEEE 802.3 and TCP/IP. Wireless protocols may include IEEE 802.11a/b/g/n, Bluetooth, Bluetooth Low Energy (BLE), FeliCa, Zigbee, GSM, LTE, 3G, 4G, 5G, RFID and NFC.

The presentation attack detection device 210 comprises a plurality of modules, some of them being optional as explained in what follows, the modules being hardware modules or software modules.

A face detection module 213 is arranged to determine whether a face of a target person is comprised in:

- a thermal image 201 received from the thermal camera 200; and/or
- an image 203 in the visible domain received from the RGB camera 202, the image 203 being acquired in the same time period as the thermal image 201, for example in a time period of several seconds, or less than one second.

No restriction is attached to the face detection module 213, which can be based on a first model that is arranged to classify an input image, or a pair of input images, in two categories "face" and "no face", the first model being built by defining parameters based on known statistical methods or based on machine learning.

The first model can for example be a machine learning model, such as a neural network, trained by supervised learning on a first set of training data comprising first reference thermal images, each first reference thermal image being associated with a label "face" if the first reference thermal image comprises a face of a target person, and a label "no face" if the first reference thermal image does not comprise any face of a target person.

In complement, the first set of training data may comprise first reference RGB images, each first reference RGB image being associated with a label "face" if the first reference RGB image comprises a face of a target person, and a label "no face" if the first reference RGB image does not comprise any face of a target person.

According to another alternative, the first set of training data may comprise first reference pairs of images, each first reference pair of images comprising a first reference thermal image and an associated first reference RGB image, and being associated with a label "face" if the first reference thermal image and the first reference RGB image of a given first reference pair comprise a face of a target person, and a label "no face" if the first reference thermal image and the first reference RGB image of a given first reference couple do not comprise any face of a target person.

Alternatively, the first model may be obtained by unsupervised learning on the first set of training data. Still alternatively, the first model may be based on any image processing technique able to detect a face in an image, such as the Viola-Jones algorithm for example.

The first model can be stored in a memory 220 of the presentation attack detection device 210 or in an internal memory of the face detection module 213.

Preferably, the first model may be trained so as to be robust to several conditions such as pose, expression, occlusion, poor image quality and long-range distance of the target person. To this end, the first set of training data may comprise reference thermal images and/or reference RGB images that are acquired in varied conditions of pose, expression, occlusion, quality and distance of the target person.

The face detection module 213 is therefore arranged to receive a thermal image and/or an image in the visible domain and to determine whether the thermal image and/or the image in the visible domain comprises a face or not. Preferably the face detection module 213 is arranged to receive the pair of images comprising a thermal image 201 and an image 203 that have been acquired in a same period of time, and to determine whether the pair of images comprises a face or not.

If not, the thermal image and/or the image in the visible domain can be discarded and the information "no face detected" can be indicated to a decision module 221. If a face of a target person is detected, the face detection module 213 transmits the thermal image 201 and the image 203 in the visible domain to the next module for further processing, for example to a facial landmark detection module 214 described hereafter. In addition, the face detection module 213 may transmit the information "face detected" to the decision module 221.

The presentation attack detection device 210 may further comprise a facial landmark detection module 214 that is arranged to determine at least one landmark, and preferably several landmarks, of a face that is detected by the face detection module 213 in the thermal image 201 and in the image 203 in the visible domain.

Facial landmark detection generally involves at least one of the following landmarks, or any combination of the following landmarks: eyes, nose, mouth and chin. In what follows, it is considered for illustrative purposes that the facial landmark detection aims at determining the above listed landmarks.

To this end, the facial landmark detection module 214 may process the thermal image 201 and the image 203 in the visible domain based on a second model, that is arranged to identify the above landmarks based on the thermal image 201 received from the face detection module 213. The second model may be built based on some parameter determined based on a known statistical method, or that are obtained based on machine learning. According to some embodiments, the facial landmark detection module 214 may process:

- the thermal image 201 based on a thermal second model, arranged to determine landmarks based on an input thermal image; and
- the image 203 in the visible domain based on a visible second model arranged to determine landmarks based on an input image in the visible domain.

Some examples of facial landmark detection models based on machine learning are known, such as a predictive model under the form of a neural network, in particular a Convolutional Neuronal Network, CNN. Similar models can be trained by supervised learning based on a second set of training data comprising thermal images and images in the visible domain, labelled with reference coordinates of landmarks, to obtain the second model or the second models. Alternatively, the second model may be alternatively trained by unsupervised learning. Still alternatively, the second model is not built by machine learning, but is derived from known image processing techniques.

The facial landmark detection module 214 may also determine an information to indicate whether a landmark has been detected or not in the thermal image 201 and/or in the image 203 in the visible domain. If no landmark has been detected, the thermal image 201 and/or the image 203 in the visible domain can be discarded and the information "no landmark detected" can be indicated to the decision module 221. If one or several landmarks have been detected, the facial landmark detection module 214 transmits the thermal image 201 and the image 203 in the visible domain to the next module for further processing: the facial landmark detection module 214 may transmit the thermal image 201 to a second face alignment module 215.2 and the image 203 in the visible domain to a first face alignment module 215.1. In addition, the facial landmark detection module 214 may transmit the information "landmark detected" to the decision module 221.

Therefore, both the face detection module 213 and the facial landmark detection module 214 may act as pre-filtering modules, to detect some simple PAIs that do not need further processing.

According to some embodiments, the face detection module 213 and the facial landmark detection module 214 are one and the same module, that can determine simultaneously the landmarks of a face, in case a face is detected in the thermal image 201 and/or in the image 203 in the visible domain, or can determine that the thermal image 201 and/or in the image 203 in the visible domain comprise no face of a target person, based on a single face and landmark detection model.

Once the landmarks are detected in the thermal image 201 and in the image 203 in the visible domain, the thermal image 201 and the image 203 may be transmitted with the coordinates of the landmarks, and optionally with geometrical information of the landmarks, by the facial landmark detection module 214 to the first and second face alignment modules 215.1 and 215.2.

If some of the landmarks cannot be identified by the facial landmark detection module 214, the presentation attack detection device 210 may consider that the face of the target person is partially or fully shielded, and may discard the thermal image 201 and the image 203.

The first facial alignment module 215.1 is arranged to perform a canonical face alignment, based on the landmarks detected in the image 203, to obtain an aligned image in the visible domain to be transmitted to a first comparison module 216 and to a second comparison module 218. The aligned image in the visible domain may be cropped before being transmitted.

The second facial alignment module 215.2 is arranged to perform a canonical face alignment, based on the landmarks detected in the thermal image 201, to obtain an aligned thermal image to be transmitted to a domain translation module 217 and to the first comparison module 216. The aligned thermal image may be cropped before being transmitted.

Depending on the distance between the target person and the cameras 200 and 202 and of the position of the target person, the face of the target person may vary in size and orientation in the thermal image 201 and in the image 203. Therefore, when performing the canonical face alignment of the thermal image 201 to obtain the aligned thermal image aligned on the canonical face of the target person and when performing the canonical face alignment of the image 203 to obtain the aligned image in the visible domain, the thermal image and the image in the visible domain are adapted to the distance and position of the target person, which makes the invention compatible with passive detection methods.

The canonical face alignment function performed by the first face alignment module 215.1 and by the second face alignment module 215.2, can be performed by the facial landmark detection module 214. In that case, the presentation attack detection device 210 does not comprise the first and second face alignment modules 215.1 and 215.2. The aligned thermal image is transmitted from the facial landmark detection module 214 to the domain translation module 217 and to the first comparison module 216, and the aligned image in the visible domain is transmitted from the facial landmark detection module 214 to the first comparison module 216 and to the second comparison module 218.

The first comparison module 216 is configured to compare the aligned thermal image and the aligned image in the visible domain, and to evaluate a first similarity score, the first similarity score being representative of a similarity between an identity of the person in the aligned thermal image and an identity of the person in the aligned image in the visible domain. The identity of the person in the aligned thermal image can be evaluated based on the respective positions of the landmarks in the aligned thermal image, and the identity of the person in the aligned image in the visible domain can be evaluated based on the respective positions of the landmarks in the aligned thermal image and in the aligned image in the visible domain. Therefore, the first comparison module 216 can evaluate the first similarity score by comparing the facial features, in the aligned thermal image and facial features in the aligned image in the visible domain.

According to some embodiments, to evaluate the first similarity score, the first comparison module 216 may apply a third model that is stored in the memory 220, and that is able to issue a first similarity score as output, when receiving an aligned thermal image and an aligned image in the visible domain as inputs. The third model may be obtained by machine learning, such as supervised learning, based on a third training dataset comprising pairs of aligned thermal images and associated aligned images in the visible domain, each pair being labelled with a similarity score. Alternatively, the third model may be obtained by unsupervised learning.

The domain translation module 217 is arranged to translate the aligned thermal image, which is in a first spectral domain such as a MWIR or LWIR spectral domain, to a synthesized image in the visible domain. To this end, the domain translation may be based on a fourth model that is generative, arranged to receive images in the first spectral domain and to predict, or generate, a corresponding synthesized image in the visible domain. To do this, the fourth model may be a generative model or diffusion model obtained by machine learning, for example by supervised learning based on a fourth set of data comprising thermal images labelled with a corresponding reference image in the visible domain. The fourth model is trained so as to minimize at least one loss function calculated based on the predicted (or synthesized) image in the visible domain and the reference image in the visible domain.

Preferably, the fourth model is arranged to process aligned thermal images having different resolutions, and not only one given fixed resolution.

The domain translation enables to perceive any artefacts or defects that cannot be perceived in the thermal domain. Also, as explained hereafter, it allows an accurate comparison between the aligned image in the visible domain and the synthesized image in the visible domain, implemented by the second comparison module 218, as described in what follows, the comparison being performed in the same domain.

Preferably, the fourth model is trained to preserve identity information contained in the aligned thermal image, in the synthesized image in the visible domain.

Also, according to some embodiments, the fourth model is trained to enhance the resolution of the aligned thermal image, which can be a low resolution because of the thermal camera 200 and because of the distance of the target person, to obtain a high-resolution visible image. The capacity to predict a high-resolution image based on a low resolution image is called super resolution and will be explained in what follows.

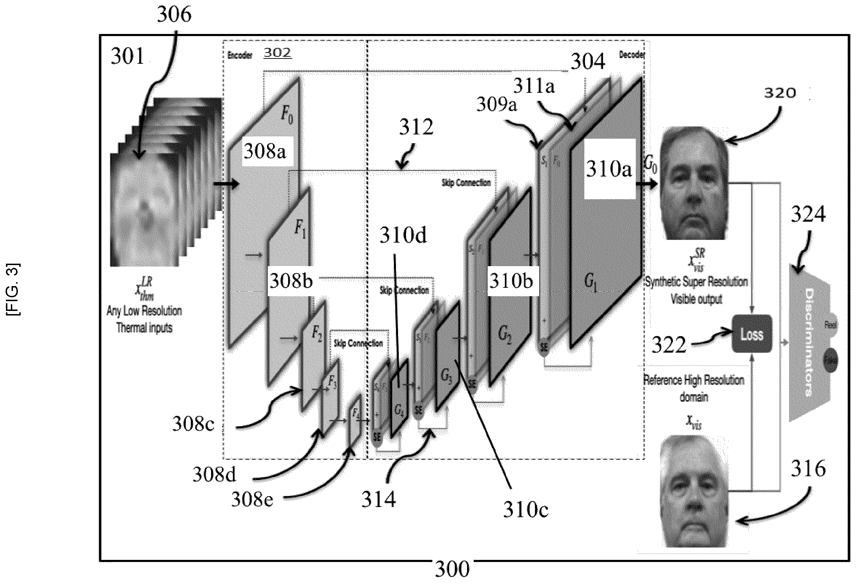

A detailed example of the fourth model that allows both spectral domain translation and super resolution will be further described with reference to figure 3.

The synthesized image in the visible domain can also be transmitted by the domain translation module 217 to a third classification module 222, that is described in what follows. The second comparison module 218 is configured to compare the synthesized image in the visible domain and the aligned image in the visible domain, and to evaluate a second similarity score, the second similarity score being representative of a similarity between an identity of the person in the synthesized image and the identity of the person in the aligned image in the visible domain.

The identity of the person in the synthesized image can be evaluated based on an analysis of facial features of the synthesized image, and the identity of the person in the aligned image in the visible domain can be evaluated based on an analysis of facial features of the aligned image in the visible domain. Therefore, the second comparison module 218 can evaluate the second similarity score by comparing the facial features in a single domain (the visible domain), and the second similarity score may be based on features that cannot be determined in the aligned thermal image, such as skin texture. The second similarity score can therefore be different from, and complementary, to the first similarity score.

According to some embodiments, to evaluate the second similarity score, the second comparison module 218 may apply a fifth model that is stored in the memory 220, and that is able to issue a second similarity score as output, when receiving an aligned image in the visible domain and a synthesized image in the visible domain as inputs. The fifth model may be obtained by machine learning, such as supervised learning, based on a fifth training dataset comprising couples of aligned images in the visible domain and associated synthesized images in the visible domain, each couple being tagged with a similarity score. Alternatively, the fifth model may be obtained by unsupervised learning.

The first similarity score and the second similarity score allow to determine whether the person identified based on the thermal image (in the aligned thermal image and in the synthesized image in the visible domain) is the same person as the person identified in the aligned image in the visible domain.

This allows to detect presentation attacks that are based on expensive 3D masks, in latex or silicon for example, even when the mask is worn during a long period by the attacker. Indeed, when wearing a 3D mask, the radiation of the real face of the attacker can leak through the mask, and can be detected by the thermal camera 200. In that case, the identity that is leaking through the mask and that is detected in the aligned thermal image and/or in the synthesized image, is different from the identity represented by the mask, that is detected by the RGB camera 202.

To this end, the presentation attack detection device 210 may further comprise a global comparison module 219, that is arranged to issue a first classification classifying the pair of images received by the first interface 231 and by the second interface 232, in a category, among a first category, named "attack" for example, indicating that the face identified in the images is fake, and a second category, named "genuine" for example, indicating that the face in the images is the face of the genuine person.

The first classification determined by the global comparison module 219 is:

- based on the first similarity score;
- based on the second similarity score; or
- based on the first similarity score and on the second similarity score.

For example, the first classification determined by the global comparison module 219 may be:

- based on a comparison between the first similarity score and a first similarity threshold;
- based on a comparison between the second similarity score and a second similarity threshold; or
- based on the comparison between the first similarity score and the first similarity threshold and based on the comparison between the second similarity score and the second similarity threshold.

The global comparison module 219 is further configured to transmit the first classification in which the couple of images is classified, to the decision module 221.

As explained above the synthesized image in the visible domain can also be transmitted to the classification module 222. The classification module 222 is configured to receive a visible image as input comprising a face of a target person and to determine a second classification classifying the visible image in one of the two categories "genuine", if the target person is considered a real person, or "attack" if a PA is detected. The second classification is obtained independently from the first classification described above: of course, they can be consistent and indicate the same category "genuine" or "attack".

To this end, the classification module 222 may implement a sixth model, the sixth model being arranged to receive a synthesized image in the visible domain as input and to predict a category among the two categories "fake" and "live" mentioned above, provided as second classification. No restriction is attached to the sixth model, which can be defined by defining parameters using a statistical method, or which can be obtained based on machine learning.

For example, the sixth model obtained based on machine learning may be a neural network that is configured to extract features. An output layer of the sixth layer is configured to predict the category "genuine", or "attack" based on the features extracted from the synthesized image in the visible domain received as input.

The sixth model may be trained by supervised learning based on a sixth set of training data, comprising reference images in the visible domain, and preferably images synthesized by applying domain translation to thermal images, labelled with the category genuine or attack. Alternatively, the sixth model may be trained by unsupervised learning.

The classification module 222 is configured to transmit the second classification output by the sixth model, to the decision module 221.

According to some embodiments of the invention, after face detection and landmark detection (and if a face and landmarks are detected in both the image 203 and in the thermal image 201), the landmark detection module 214 transmits the thermal image 201 and optionally the coordinates of the landmarks of the thermal image 201, to a first large face cropping module 211.1, which is arranged to crop the thermal image 201 to obtain a large face cropped thermal image. The large face cropped thermal image is cropped on a larger area than the cropped thermal image previously described above after canonical face alignment. For example:

- the canonical face alignment in the aligned thermal image comprises only the face of the target person and no background, or less than 5% of background in the aligned thermal image;
- the large face cropped thermal image comprises the face of the target person and more than 5% of background, for example more than 30% of background.

The first large face cropping module 211.1 is configured to transmit the large face cropped thermal image to a thermal domain classification module 212.1.

Alternatively, the function of large face cropping is performed by the landmark detection module 214, and, in that embodiment, the presentation attack detection device 210 does not comprise the first large face cropping module 211.1. The large face cropped thermal image is therefore transmitted from the landmark detection module 214 to the thermal domain classification module 212.1.

The thermal domain classification module 212.1 is configured to receive as input a thermal image, such as the large face cropped thermal image, and to determine a third classification indicating a category among the two categories "genuine" or "attack".

To this end, the thermal domain classification module 212.1 may implement a seventh model configured to receive as input a thermal image, such as the large face cropped thermal image, and to classify the target person in the input large face cropped thermal image in the category "genuine" or "attack", to obtain the third classification.

No restriction is attached to the seventh model, which can be defined by parameters that are obtained by a known statistical method, or which can be obtained based on machine learning.

For example, the seventh model may be obtained based on machine learning may be a neural network, such as a deep neural network, that is configured to extract features. An output layer of the seventh layer is configured to predict the third classification based on the features extracted from the input large face cropped thermal image.

The seventh model may be trained by supervised learning based on a seventh set of training data, comprising reference large face cropped thermal images labelled with the category genuine or attack.

The first classification module 212.1 is configured to transmit the determined third classification to the decision module 221.

According to some embodiments of the invention, after face detection and landmark detection (and if a face and landmarks are detected in both the image 203 and in the thermal image 201), the landmark detection module 214 transmits the image 203 in the visible domain and optionally the coordinates of the landmarks of the image 203, to a second large face cropping module 211.2, which is arranged to crop the image 203 to obtain a large face cropped image in the visible domain. The large face cropped image in the visible domain is cropped on a larger area than the cropped image in the visible domain previously described above after a canonical face alignment. For example:

- the canonical face alignment in the aligned image in the visible domain comprises only the face of the target person and no background, or less than 5% of background in the aligned image in the visible domain;
- the large face cropped image in the visible domain comprises the face of the target person and more than 5% of background, for example more than 30% of background.

The second large face cropping module 211.2 is configured to transmit the large face cropped image in the visible domain to a visible domain classification module 212.2.

Alternatively, the function of large face cropping is performed by the landmark detection module 214, and, in that embodiment, the presentation attack detection device 210 does not comprise the second large face cropping module 211.2. The large face cropped image in the visible domain is therefore transmitted from the landmark detection module 214 to the visible domain classification module 212.2.

The visible domain classification module 212.2 is configured to receive as input an image in the visible domain, such as the large face cropped image in the visible domain, and to determine a fourth classification indicating a category among the two categories "genuine" or "attack".

To this end, the visible domain classification module 212.2 may implement an eighth model configured to receive as input an image in the visible domain, such as the large face cropped image in the visible domain, and to classify the target person in the input large face cropped image in the visible domain in the category "genuine" or "attack", to determine the fourth classification.

No restriction is attached to the eighth model, which can be defined by parameters that are determined by a known statistical method, or which can be obtained based on machine learning.

For example, the eighth model may be obtained based on machine learning may be a neural network, such as a deep neural network, that is configured to extract features. An output layer of the eighth layer is configured to predict the fourth classification based on the features extracted from the input large face cropped image in the visible domain.

The eighth model may be trained by supervised learning based on an eighth set of training data, comprising reference large face cropped images in the visible domain labelled with the category live or fake.

The second classification module 212.2 is configured to transmit the determined fourth classification to the decision module 221.

The decision module 221 is configured to determine a final decision of the target person of the thermal image 201 and image 203, as genuine or attack, based at least on the first classification received from the global comparison module 219, and optionally based on or several of the following:

- the information indicating whether a face is detected or not, received from the face detection module 213;
- the information indicating whether landmark is detected of not, received from the facial landmark detection module 214;
- the second classification received from the classification module 222;
- the third classification received from the thermal domain classification module 212.1; and/or
- the fourth classification received from the visible domain classification module 212.2.

To this end, the decision module 221 may apply a predetermined fusion function to determine a PAD score based on the at least one received classification. The final decision can then be determined based on the PAD score. For example, the final decision may comprise a binary information indicating "genuine" or "attack" for the target person comprised in the thermal image 201 and in the image 203.

The final decision may further comprise a PAI identifier, in case where the binary information indicates "attack", the PAI identifier identifying the instrument used by the target person during the PA. The PAI identifier may be determined based on the PAD score, or based on predetermined rules applied to the classification, when a first classification is received from the global comparison module 219, and at least another classification is received from the thermal domain classification module 212.1, the visible domain classification module 212.1 and/or the classification module 222.

For example, if the global comparison module 219 transmits the first classification indicating the category "attack" and one or several of the thermal domain classification module 212.1 and visible domain classification 212.2 transmit a classification indicating the category "genuine", the PAI identifier may indicate that the PAI is a 3D mask, in latex or silicon. Less sophisticated PAI may be identified when the classification by at least one of the classification module 222, the thermal domain classification module 212.1 and the visible domain classification module 212.2, indicates the category "attack".

The final decision determined by the decision module 221 may be transmitted to an external entity via an output interface 233, and/or may be stored in the memory 220 of the presentation attack detection device 210.

For example, the final decision may be transmitted to a face recognition device, along with the image 203 in the visible domain, and optionally with the thermal image 201 and/or with the synthesized image in the visible domain. If the face of the person in the image 203 is considered as genuine, the face recognition device may compare the image 203, or features of the image 203, with features from reference images in the visible domain, of a database, to identify the target person in the image 203.

Alternatively, face recognition may be performed by the presentation attack detection device 210. For example, the presentation attack detection device 210 may store the database with the reference images associated with respective identity information of persons. If the final decision is fake, the thermal image 201 and the image 203 can be discarded by the presentation attack detection device 210. If the final decision is "genuine", the presentation attack detection device 210 may compare the image 203, or features of the image 203, with the reference images to determine identity information of the target person in the thermal image 201.

The face recognition operation is well known and is not further described in the present description.

Therefore, the invention allows to detect a large panel of PAs, including full latex or silicon masks, even when they are worn by the attacker during a long period of time, by using a comparison between the identity identified based on the thermal image 201 and the identity identified based on the image 203 in the visible domain.

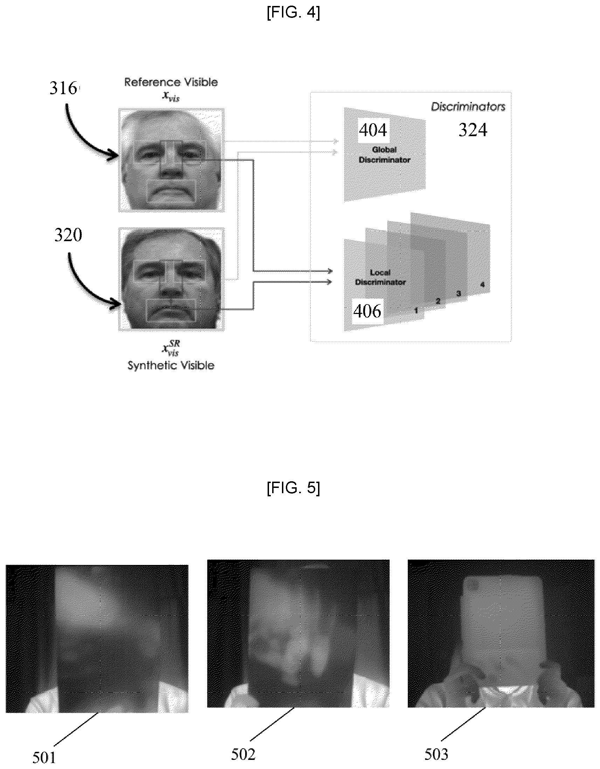

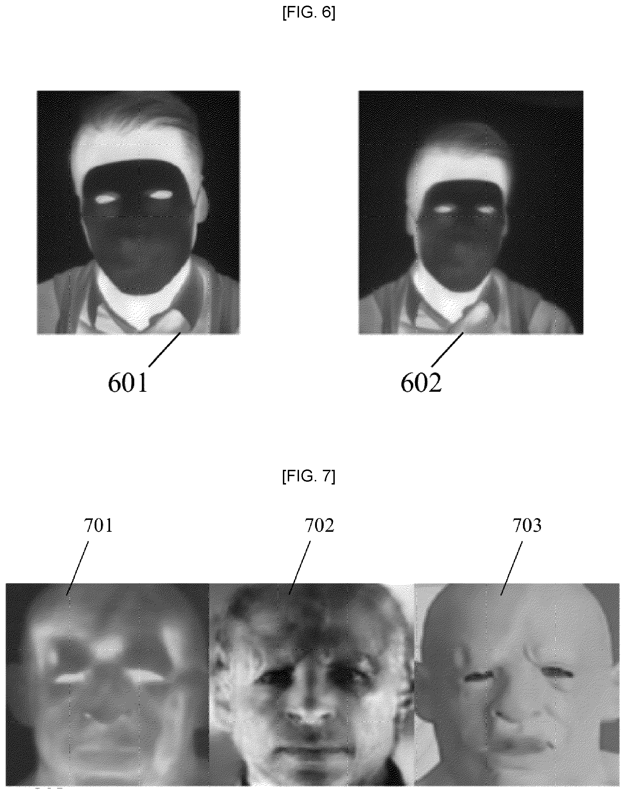

Indeed, when using PAIs such as a printed facial picture, a 2D or 3D mask, a smartphone or tablet as PAI, thermal cameras are challenged to acquire faces since radiations information are blocked in the thermal images which display thermally-uniform shape and temperature, as it will be described from figures 5 and 6 that will be described hereafter.

Therefore, in that case, the face detection module 213 fails to detect a face in the thermal image 201, and plays the role of PA detector: the information "no face" transmitted to the decision module 221 can be interpreted as a PA based on a printed facial picture, a smartphone or a tablet.

For more advanced PAIs, for example based on a full latex or silicon face mask, a face is detected by the face detection module 213 in both the thermal image 201 and the image 203, and thermal image 201 and image 203 are further processed by the other modules. Unrealistic 3D masks, 2D masks, or realistic 3D mask that have been worn for a short period, may be detected by one or several of the classification module 222, the thermal domain classification module 212.1 and the visible domain classification module 212.2, whereas realistic 3D masks that are worn for longer periods are detected by the global comparison module 219.

Some realistic 3D masks may also be detected by the classification module 222. As explained above with reference to figure 1, when wearing a full facial mask, the mask warms up in contact with the skin, thus diffusing more uniformly the heat energy, compared to when the target person just wears it cold. Although the heat spreads over the face, higher energy is escaping from specific areas such as eyes, mouth and the neck. Such changes in the facial heat distribution appear as solid clues after domain translation by the domain translation module 217, because eyes and mouth areas are relevant biometrics identity features. Therefore, the change of such features disturbs the domain translation module 217, thus generating unrealistic faces that are classified as "attack" by the classification module 222.

The first to seventh models described above can be stored in the modules respectively implementing them, or can alternatively be stored in the memory 220 of the presentation attack detection device 210.

Figure 3 shows an example of the Generative Adversarial Network, GAN, 300 trained to obtain the fourth model used by the domain translation module 217 according to some embodiments of the invention.

The fourth model is also referred to as "ANYRES", and enables simultaneously performing face super resolution and thermal to a visible domain, translation while being robust to any low-resolution thermal inputs while preserving the identity. Benefits from the simultaneous process helps to avoid accumulating both errors and artifacts generation and to simultaneously bridge the modality gap and resolution gap. In particular with reference to figure 3, blurry, thermal and low-resolution, LR, face images 306 are transformed into sharp, realistic, high-resolution synthesized visible face images 320, after the training process that is described hereafter.

The designed fourth model brings the advantages to preserve consistent biometrics features across both low/high resolution space and thermal/visible spectrum. Furthermore, the embodiments appear to be adaptive to real world scenarios as during operational applications humans are randomly distant from the camera and can therefore depict multi-scale LR thermal images (which depends on the acquisition distance). Unlike known technology, where the resolution is fixed as input, ANYRES highlights its ability to operate at any input resolution ranging from low to high resolution. In figure 3, the thermal images range from higher resolution to lower resolution across layers 308a to 308e of an encoder 302 of a generative adversarial network 300. The first layer 308a is arranged to receive a thermal image 306 as input.

According to some embodiments, 308a to 308e are encoded layers rather than images. For example, 308a would be a set of maps, which are also known as images, but the preferred technical term is a "map" at this stage. For example, 308a can have 16 maps, 308b can have 32 maps, and so on. The increasing number of maps is not mandatory, but it is typically an ensemble.

The GAN 300 further comprises a decoder 304, arranged to synthesize a visible image base on the maps received from the last layer 308e of the decoder 302.

After the training phase, the encoder 302 and the decoder 304 together form the fourth model, which is referenced 301, that can be implemented during a current phase, by the domain translation module 217. The fourth model 301 is trained as the generator part of the GAN 300.

The decoded synthetic visible output "images" or layers 310a-d (likewise, as noted with respect to 308a-e, will be sets of maps and not single images) ranging from higher resolution to lower resolution from 310a to 310d as shown using the decoder 304. In some embodiments as further detailed below, the fourth model performs the step of skip connection 312 between encoded infrared face images and the decoded high-resolution visible face images. In some embodiments, the fourth model will also perform the step of squeeze and excitation 314 between encoded infrared face images and the decoded high-resolution visible face images. In some embodiments, the GAN 300 will also use a reference visible image 316 to account for loss functions that are used to train the fourth model during the training phase.

In a GAN, a discriminator part is in charge of receiving a couple of images, and to determine which of the images is real, the other being synthesized.

The GAN therefore further comprises a discriminator 324, that implements one or several discriminator functions, and that aim at determining, which from the synthesized image 320 in the visible domain and the corresponding reference image 316, is real. If the discriminator 324 manages to guess that the synthesized image 320 has been synthesized, at least one change is made in the layers or connections to improve the process of synthesizing the visible image 320, and the training process is repeated by providing a new pair of images to the discriminator 324.

In addition, additional loss functions 322 that will be described hereafter can be used during the training process, and the fourth model 301 is configured to minimize the additional loss functions 322, or a combination of these functions, and to prevent the discriminator 324 to distinguish real visible images from synthesized images.

Figure 4 shows an example of discriminator 324 that can be used during the training phase of the fourth model of domain translation according to some embodiments of the invention.

The discriminator 324 may comprise a Global discrimination function 404 and Local discriminations functions 406. While global discriminator 404 helps generate the right identity overall, the local discriminators 406, named L1, L2, L3 and L4 are located on eyes, nose and mouth, respectively (of the reference visible image 316 and a synthesized visible image 320), are designed to focus on generated details of cross-spectral biometrics features and helps improve that identity by focusing on more biometric-relevant parts of the face.

The discriminator 324 therefore tries to determine which from the input images 316 and 320 is the real one, and which is one is synthesized.

Details of the problem formulation, layers, loss functions and discriminators used during the training phase of the fourth model being the generator of the GAN 300, are given hereafter, for illustrative purposes.

We consider a high-resolution space, with dimensionality $m \times n$, incorporating a visible domain $V$ with visible face images $xvis \in Rm{\times}n,$ and a thermal domain $T$ with thermal face images $xthm \in Rm{\times}n$.

In what follows, $xvis$ designates the reference visible image 316 that is paired with the synthesized visible image 320 in the fourth set of training data, which is noted $x^{SR}vis$.

The fourth model 301 may consist in a domain translation phase and a super resolution phase.

In the domain translation phase, image-to-image translation is performed by learning an end-to-end non-linear mapping, denoted $\Theta t{\rightarrow}v$, between the thermal spectrum and the visible spectrum. This is formalized as follows:

$$\Theta_{t \to v} \; : \quad \begin{array}{ccc} \mathcal{T} & \to & \mathcal{V} \\ x_{thm} & \mapsto & x_{vis}^{synthetic} \end{array} . \qquad (1)$$

Consequently, $\Theta t{\rightarrow}v$ is the function that synthesizes a thermal face image 306 into a realistic synthesized image 320 $x^{SR}vis$ in the visible domain and in the high-resolution space.

In the super resolution phase, given the embedding of Equation (1) above, the fourth model 301, or network 301, encapsulates as a simultaneous task, the super resolution scalability. Therefore, during the training, the fourth model 301 learns a conditional generation function where thermal low resolution facial image $x_{thm}^{LR} \in \mathbb{R}^{\frac{m}{r} \times \frac{n}{r}}$ is also enhanced to the high-resolution scale, giving a synthesized visible image 320. $x_{vis}^{SR} \in \mathbb{R}^{m \times n}$ up-scaled by a $\times r >$ 0 scale factor, via:

$$x_{vis}^{SR} = \Theta_{t \to v}\big(x_{thm}^{LR}\big). \qquad (2)$$

Domain translation, with the objective of being robust to any low-resolution thermal inputs, aims to learn a unified function that, when applied to any low-resolution thermal image $x^{LR}thm$, yields a higher-resolution synthesized visible image 320 with rich semantic and identity information. In this context, the fourth model according to the invention leans simultaneously the global interaction between both domain translation and resolution scalability through the enrichment of Equation (1) by Equation (2).

The GAN 300 is trained on a fourth set of training data, comprising thermal images for all scale factors $0 < r \leq m$, associated with reference images in the visible domain.

The fourth model 301 is based on a U-shape pyramidal architecture network, thus relying naturally on a multi-scale analysis. The overall architecture is illustrated in figure 3. In one particular implementation, a U-Net architecture is used for its efficiency, where the generator 301, or fourth model 301, consists of an encoder-decoder structure 302-304 with skip connections 312 between domain specific encoder 302 and decoder 304. Considering the larger discrepancy between the images resulted from LR and High Resolution, HR, spaces, the GAN 300 further uses Squeeze-and-Excitation, SE, blocks 314, which play the role of gate modulator after each skip connections process. With such strategy, channel-wise relationships bring flexible control and balances encoded features with decoded super resolved features.

During training time, the generation 301 is fed simultaneously by batches of a wide range r-scale factor of low-resolution thermal images 306. Note that, in the extreme case where only one low scale of resolution is considered, with fixed r, the model would be able to super resolve thermal images from $\frac{m}{r} \times \frac{n}{r}$ to $m \times n$ scale of space (i.e., fixed low-resolution input unlike any low-resolution input). A model trained with one scale factor is called mono-resolution, whereas a model trained with several scale factor is called multi-resolution.

The encoder 302 can extract multi-resolution features in parallel and fuse them repeatedly during learning in order to generate high-quality SR-representations, 320, with rich semantic/identity information.

Given a LR thermal input image 306, a layer $H_0$ transforms it into a high-dimensional feature space:

$$F_0 = H_0(x_{thm}^{LR}). \qquad (3)$$

Here, Ho refers to a composite function of two successive Convolution-BatchNormalization-ReLU layers. Then, the generator 301 applies a sequence of operations:

$$F_i = H_i(\mathrm{Pool}(F_{i-1})), \qquad (4)$$

where $F_i$ represents the intermediate encoded feature maps after the i-th operation, for all $i \in [1,K]$ with $K \in \mathbb{N}_*$. Here, $H_i$ is the same composite function defined in Equation (3), and Pool denotes a max pooling operation where the most prominent features of the prior feature map are preserved. This is implemented for layers 308a through 308e.

The decoder 304 aims at transforming a high-dimensional feature space into an output super resolved image 320 in the visible domain. Hence, the generative task towards the super resolved images 320 is started from the deep level (U bottleneck) with equation (5) below:

$$G_K = H_K(SE(C(F_{K-1}, S_K(F_K)))). \qquad (5)$$

Then sequentially incremented, for all $i \in [1,K - 1]$, the layers 310a to 310c implement:

$$G_i = H_i(SE(C(F_{i-1}, S_i(G_{i+1})))), \qquad (6)$$

The decoding process ends with the generation of the synthesized image 320 in the visible domain through Convolution-Tanh layers, given by equation 7 below:

$$G_0 = x_{vis}^{SR}. \qquad (7)$$

While S refers to upsampling operation of factor 2 followed by Convolution-BatchNormalization-ReLU layers, C concatenates all channels from the skip connection 312 $F_{i-1}$ (see 311 a) with the up-sampled $S_i$ layers (see 309a). Finally, $G_i$ represents the decoded intermediate feature maps (see, for example, 310a) after the i-th operation preceded by Squeeze and Excitation SE 314.

The discriminator functions implemented by the discriminator 324 of the GAN 300 are detailed hereafter.

As explained above, the discriminator comprises global and local discriminators named $Dis_{global}$ and $Dis_{local}$ respectively. The former helps the above generator to synthesize photo-realistic HR image in the visible spectrum, whereas the latter (in some embodiments) pays attention to every single facial fine detail and benefits from local inherent attention to capture faithful biometric features during the generation.

Global Discriminator: In some embodiments, a multi-scale discriminator is used which enables generation of realistic images with refined details. The global discriminator 404 in figure 4, is responsible for performing a binary-classification by distinguishing a super resolved, or synthesized, visible image 320 $x^{SR}_{vis}$ from reference visible image $x_{vis}$. 316.

Local Discriminator: To synthesize biometric-realistic semantic content, the embodiments can focus on discriminative areas relevant for identity information, such as eyes, nose and mouth. Such regions of interests are represented by the same cropping area as shown in figure 4 between the images $x_{vis}$ and $x^{SR}_{vis}$ respectively titled $x^{SR}_{vis\text{-}ROI,i}$ with $i \in [0, 4]$. Each independent discriminator pays attention to every single facial fine detail and benefits from local inherent attention to capture faithful biometric features during the generation.

The adversarial learning process of the fourth model 301 can be further augmented by an efficient combination of objective functions and pave the way to control the synthesis process at both pixels and features levels.

On the one hand, the adversarial loss implemented by the discriminator 324, including global and local is responsible to make generative sample realistic and not distinguishable from real images in the visible domain. And on the other hand, additional loss functions 322, described hereafter, such as the L1 loss drives the spectrum translation, while the perceptual loss, identity loss and attribute loss are used at high-level features to affect the perceptive rendering of the image, preserve the biometrics identity-specific features and enforce the consistent age-gender reconstruction, respectively. All loss functions combined together bring realism during spectral translation and avoid blurriness introduced by any low scale of resolution from thermal image inputs.

Regarding the adversarial loss, images generated by the fourth model through Equation (1) must be realistic. Therefore, the objective of the fourth model is to maximize the probability of the discriminator 324 making incorrect decisions. The objective of the discriminator 324, on the other hand, is to maximize the probability of making a correct decision, i.e., to effectively distinguish between real and synthesized images. The global loss function $\mathcal{L}^{Global}_{GAN}$ and local loss function $\mathcal{L}^{Local}_{GAN}$ are part of the adversarial training and defined as follows

$$\mathcal{L}^{Global}_{GAN} = \mathop{\mathbb{E}}_{x_{vis} \sim p_V} \left[\log(\mathbf{Dis}_{global}(x_{vis}))\right] + \mathop{\mathbb{E}}_{x^{SR}_{vis} \sim p_V} \left[\log(1 - \mathbf{Dis}_{global}(x^{SR}_{vis}))\right],$$

$$\mathcal{L}^{Local}_{GAN} = \sum_{i=0}^{4} \mathcal{L}^{Local,i}_{GAN},$$

where for all $i \in [0,4]$, local discriminator $L_i$ gives the associated loss

$$\mathcal{L}^{Local,i}_{GAN} = \mathop{\mathbb{E}}_{x_{vis-ROI,i} \sim p_V} \left[\log(L_i(x_{vis-ROI,i}))\right] + \mathop{\mathbb{E}}_{x^{SR}_{vis-ROI,i} \sim p_V} \left[\log(1 - L_i(x^{SR}_{vis-ROI,i}))\right],$$

then, the adversarial loss is denoted as follows.

$$\mathcal{L}_{GAN} = \mathcal{L}^{Global}_{GAN} + \mathcal{L}^{Local}_{GAN}. \qquad (8)$$

Additional loss functions 322 are described hereafter.

Setting a condition on the spectral distribution is advantageous for generating images within the target spectrum. The conditional loss, $L_{cond}$ or known as L1 loss, is defined as follows in equation 9

$$\mathcal{L}_{cond} = \mathop{\mathbb{E}}_{x_{vis};x_{vis}^{SR}\sim p_{\mathcal{V}}} \left\| x_{vis}^{SR} - x_{vis} \right\|_1. \qquad (9)$$

The perceptual loss $L_P$ affects the perceptive rendering of the image by measuring the high-level semantic difference between synthesized and target face images. It reduces artifacts and enables the reproduction of realistic details. $L_P$ is defined as follows

$$\mathcal{L}_P = \mathop{\mathbb{E}}_{x_{vis};x_{vis}^{SR}\sim p_{\mathcal{V}}} \left\| \phi_P(x_{vis}^{SR}) - \phi_P(x_{vis}) \right\|_1, \qquad (10)$$

where, $\phi_P$ represents features extracted by VGG-19, pre-trained on ImageNet.

The identity loss $L_I$ preserves the identity of the facial input and relies on a pre-trained ArcFace recognition network to extract facial features embedding. Then, cosine similarity measure provides the identity loss function:

$$\mathcal{L}_I = \mathop{\mathbb{E}}_{x_{vis};x_{vis}^{SR}\sim p_{\mathcal{V}}} \left[ 1- < \phi_I(x_{vis}), \phi_I(x_{vis}^{SR}) > \right], \qquad (11)$$

The attribute loss $L_A$ prevents attribute shift during domain translation. In particular, age and gender information are subtly not available on thermal images. While age brings apparent information, gender relies on identity. Therefore, apparent age loss $L^{Age}_A$ and gender loss $L^{Gender}_A$ are defined as follows:

$$\mathcal{L}_A^{Age} = \mathop{\mathbb{E}}_{x_{vis};x_{vis}^{SR}\sim p_{\mathcal{V}}} \left\| \phi_{Age}(x_{vis}^{SR}) - \phi_{Age}(x_{vis}) \right\|_1, \qquad (12)$$

$$\mathcal{L}_A^{Gender} = \mathop{\mathbb{E}}_{x_{vis};x_{vis}^{SR}\sim p_{\mathcal{V}}} \left\| \phi_{Gender}(x_{vis}^{SR}) - \phi_{Gender}(x_{vis}) \right\|_1, \qquad (13)$$

where $\phi_{Age}$ and $\phi_{Gender}$ are pre-trained models based on DeepFace facial attribute framework analysis. Then, the attribute loss is denoted as equation 14 below:

$$\mathcal{L}_A = \mathcal{L}_A^{Age} + \mathcal{L}_A^{Gender} \qquad (14)$$

Finally, the overall loss function for the proposed fourth model 301 can be the combination or any combination of the aforementioned loss functions.

Figure 5 shows thermal images 501 to 503 of a presentation attack based on two-dimensional PA instruments.

On thermal images 501 and 502, there are shown presentation attacks where the target person holds a paper representing the face of another person.

On thermal image 503, there is shown a presentation attack where the target person holds a tablet on which a face of another person is displayed.

As it can be seen, acquiring thermal images enables to easily detect two-dimensional PAs, because no face is detected by the face detection unit 213 receiving the thermal images 501 to 503. The decision module 221 can then detect a PA based on a two-dimensional PAI.

Figure 6 shows PAs based on a paper 3D mask. On thermal image 601, the person starts wearing the paper 3D mask, which is therefore cold. On thermal image 602, it shows the same person with the same paper 3D mask after a certain amount of time of wearing the mask.

Acquiring a thermal image enables to show a high contrast between hair, eyes and the region of the face wearing the mask, which can be detected by the thermal domain classification module 211.1 processing thermal images, but also by the classification module 222, after domain translation to the visible domain.

The decision module 221 can therefore detect a PA based on a 3D paper mask.

For more advanced attacks, such as the ones based on full face latex or silicon masks shown on figure 1, the PAI may be detected by:

- the use of thermal images combined with domain translation, which allows the classification module 222 to detect that the target person is spoof; and/or
- the at least one comparison between the identity identified based on the thermal image 201 and the identity identified based on the image 203 in the visible domain, performed by the first comparison module 216, the second comparison module 218 and the global comparison module 219.

The decision module 221 can therefore detect a PA based on full face latex of silicon masks, even with realistic masks that are worn during a long period by the attacker.

Figure 7 illustrates images of a PA based on a 3D latex or silicon mask that has been worn by an attacker longer than a given time period.

A first image 701 corresponds to a thermal image, such as a thermal image 201 acquired by the thermal camera 200 as previously explained, representing a face of a person wearing a 3D latex mask.

A third image 703 corresponds to an image in the visible domain, such as an image 203 acquired by the RGB camera 202 as previously explained, and representing the same person wearing the 3D latex or silicon mask as in the first image 701. Therefore, the first image 701 and the third image 703 may have been obtained in a same time period, such as a same time period of one second, or even simultaneously.

The first comparison module 216 is arranged to determine facial features representative of the identity of the person in the first image 701 and facial features representative of the identity of the person in the third image 703, according to the invention, in order to estimate the first similarity score by comparing the identities.

A second image 702 corresponds to a synthesized image in the visible domain obtained by the domain translation module 217 as previously described, based on the cropped thermal image. The second comparison module 218 is arranged to determine facial features representative of the identity of the person in the second image 702 and facial features representative of the identity of the person in the third image 703, according to the invention, so as to estimate the second similarity score by comparing the identities.

Therefore, acquiring images in different spectral domain and comparing the respective facial features on the images allows to detect a PA based on a realistic 3D mask in latex or silicon. To this end, the global comparison module 219 is arranged to determine the first classification indicating a category among "genuine" and "attack" based on the first similarity score and/or based on the second similarity score.

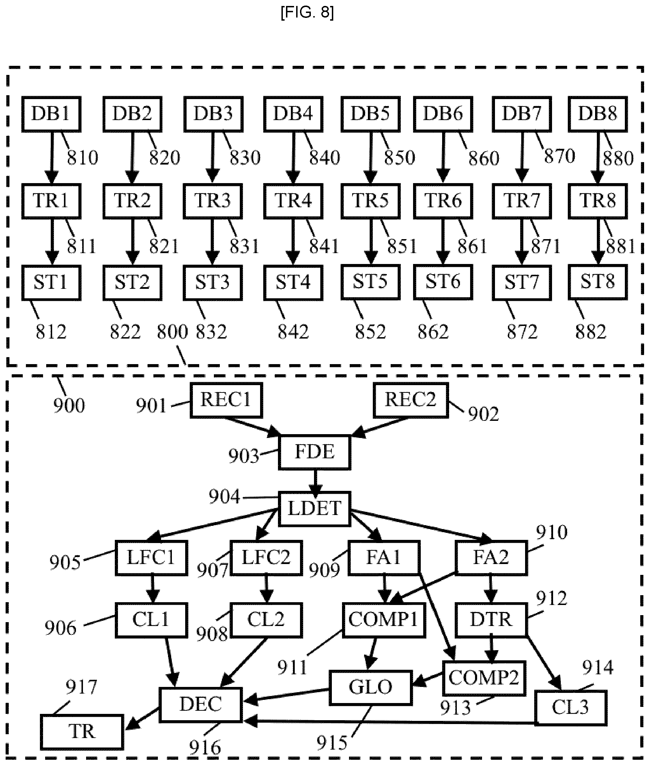

**Figure** 8 shows steps of a presentation attack detection method according to some embodiments of the invention.

The method comprises a preliminary phase 800 to build the one or several models that are stored in the presentation attack detection device 210 previously described.

At step 810, the first set of training data can be obtained, as previously explained.

The first model can be trained at step 811 based on the first set of training data. Alternatively, the first model is not obtained based on machine learning, but is obtained based derived from available methods for detecting a face in an image.

The obtained first model is then stored at step 812 in the face detection module 213 or in the memory 220 of the presentation attack detection device 210.

As explained above, the first model is arranged to receive a thermal image and to determine whether a face is detected or not in the thermal image, and is arranged to receive an image in the visible domain and to determine whether a face is detected or not in the image in the visible domain. Alternatively, a first thermal model is arranged to receive a thermal image and to determine whether a face is detected or not in the thermal image and a separate first visible model s arranged to receive an image in the visible domain and to determine whether a face is detected or not in the image in the visible domain.

At step 820, the second set of training data can be obtained, as previously explained.

The second model can be trained at step 821 based on the second set of training data. Alternatively, the second model is not obtained based on machine learning, but is derived from known methods of detecting facial landmarks in an image.

The obtained second model is then stored at step 822 in the landmark detection module 214 or in the memory 220 of the presentation attack detection device 210.

As explained above, the second model is arranged to receive a thermal image in which a face has been detected and an image in the visible domain in which a face has been detected, and to determine at least one landmark in the thermal image and at least one landmark in the image in the visible domain Alternatively, a thermal second model is arranged to receive a thermal image and to determine at least one landmark in the thermal image, and a separate visible second model is arranged to receive an image in the visible domain and to determine at least one landmark in the image in the visible domain.

At step 830, the third set of training data can be obtained, as previously explained.

The third model can be trained at step 831 based on the third set of training data. Alternatively, the third model is not obtained based on machine learning, but may be derived from available methods arranged for comparing images in different spectral domains.

The third model is arranged to issue a first similarity score as output, when receiving a cropped image in the visible domain and a cropped thermal image as inputs. To this end, the third training dataset comprises pairs of cropped thermal images and associated cropped images in the visible domain, each pair being tagged with a similarity score.

The third model is then stored at step 832 in the first comparison module 216 or in the memory 220 of the presentation attack detection device 210.

At step 840, the fourth set of training data can be obtained, as previously explained.

The fourth model can be trained at step 841 based on the fourth set of training data. A detailed example of training of the fourth model has been described when referring the figures 3 and 4 above.

The obtained fourth model is then stored at step 842 in the domain translation module 217 or in the memory 220 of the presentation attack detection device 210.

As explained above, the fourth model is arranged to receive a thermal image and to output a corresponding synthesized image in the visible domain.

At step 850, the fifth set of training data can be obtained and comprise, as previously explained, pairs of images, each pair comprising an image in the visible domain and an associated synthesized image in the visible domain, and each pair being labelled with a second similarity score.

The fifth model can be trained at step 851 based on the fifth set of training data.

Alternatively, the fifth model is not obtained based on machine learning, but is derived from available methods arranged to compare images in different spectral domains.

The fifth model is arranged to issue a second similarity score as output, when receiving a cropped image in the visible domain and a synthesized image in the visible domain as inputs.

The fifth model is then stored at step 852 in the second comparison module 218 or in the memory 220 of the presentation attack detection device 210.

At step 860, the sixth set of training data can be obtained, as previously explained.

The sixth model can be trained at step 861 based on the sixth set of training data. Preferably, the sixth model can be a neural network, such as a deep neural network. Alternatively, the sixth model is not obtained based on machine learning, but is analytically obtained.

The obtained sixth model is then stored at step 862 in the classification module 222 or in the memory 220 of the presentation attack detection device 210.

As explained above, the sixth model is arranged to receive a synthesized image in the visible domain and to output a second classification indicating a category among "genuine" and "attack" based on the thermal image.

At step 870, the seventh set of training data can be obtained, as previously explained.

The seventh model can be trained at step 871 based on the seventh set of training data. Preferably, the seventh model can be a neural network, such as a deep neural network. Alternatively, the seventh model is not obtained based on machine learning, but is derived from available methods arranged for classifying a large face cropped thermal image.

The obtained seventh model is then stored at step 872 in the thermal domain classification module 212.1 or in the memory 220 of the presentation attack detection device 210.

As explained above, the seventh model is arranged to receive a large face cropped thermal image and to output a third classification indicating a category among "genuine" and "attack" based on the large face cropped thermal image.

At step 880, the eighth set of training data can be obtained, as previously explained.

The eighth model can be trained at step 881 based on the eighth set of training data. Preferably, the eighth model can be a neural network, such as a deep neural network. Alternatively, the eighth model is not obtained based on machine learning, but is derived from available methods arranged for classifying a large face cropped image in the visible domain.

The obtained eighth model is then stored at step 882 in the visible domain classification module 212.2 or in the memory 220 of the presentation attack detection device 210.

As explained above, the eighth model is arranged to receive a large face cropped image in the visible domain and to output a fourth classification indicating a category among "genuine" and "attack" based on the large face cropped image in the visible domain.

The preliminary phase 800 may be implemented in a device, comprising processing capabilities and a memory, that is external to the presentation attack detection device 210.

The method further comprises a current phase 900 that is implemented by the presentation attack detection device 210 according to some embodiments of the invention.

At step 901, the presentation attack detection device 210 receives at least one thermal image 201 from the thermal camera 200, via the first input interface 231.

At step 902, the presentation attack detection device 210 receives at least one image 203 in the visible domain from the RGB camera 202, via the second input interface 232.

As previously explained, steps 901 and 902 are performed in the same period of time, such as a period of time of some seconds, or less than one second, so that the scene represented by the thermal image 201 and the scene represented by the image 203 are comparable, or are one and the same scene, for example a scene comprising a face of the target person.

At step 903, the face detection module 213 determines whether a face is detected or not in both the thermal image 201 and the image 203 in the visible domain. If a face is not detected in one of the thermal image 201 and the image 203, the face detection device transmits an information indicating that no face is detected, associated with the thermal image 201, or with the image 203, or with both of thermal image 201 and image 203, to the decision module 221.

Else, if a face is detected in both the thermal image 201 and the image 203, the face detection module 213 forwards the thermal image 201 and the image 203 to the landmark detection module 214 and the method goes on with step 904. An information indicating "face detected" may also be transmitted to the decision module 221, in association with the image 203 and with the thermal image 201.

At step 904, the landmark detection module 214 determines whether at least one landmark is detected in the thermal image 201 and whether at least one landmark is detected in the image 203, as previously described, by applying the second model to the thermal image 201 and to the image 203. The information indicating whether the at least one landmark is detected or not, in each of image 203 and thermal image 201, is transmitted to the decision module 221.

At a step 905, the first large face cropping module 211.1 crops the thermal image 201 to obtain a large face cropped thermal image. After step 905, the thermal domain classification module 212.1 determines the third classification among genuine and attack by applying the seventh model to the large face cropped thermal image, at step 906.

At step 907, in parallel to step 905, the second large face cropping module 211.2 crops the image 203 in the visible domain to obtain a large face cropped image in the visible domain. After step 907, the visible domain classification module 212.2 determines the fourth classification indicating a category among genuine and attack by applying the eighth model to the large face cropped image in the visible domain, at step 908.

At step 909, in parallel to steps 905 and 907, the first face alignment module 215.1 performs a canonical face alignment on the thermal image 201, based on the at least one landmark detected by the landmark detection module 214, to obtain the aligned thermal image.

At step 910, in parallel to steps 905, 907 and 909, the second face alignment module 215.2 performs a canonical face alignment on the image 203 in the visible domain, based on the at least one landmark detected by the landmark detection module 214, to obtain the aligned image in the visible domain.

At step 911, after steps 909 and 910, the first comparison module 216 estimates the first similarity score by comparing the aligned thermal image and the aligned image in the visible domain. To this end, the first comparison module 216 may apply the third model to the aligned thermal image and the aligned image in the visible domain. The first similarity score is transmitted to the global comparison module 219.

At step 912, after steps 909 and 910, the domain translation module 217 determines the synthesized image in the visible domain by applying the fourth model to the aligned thermal image. The synthesized image in the visible domain is then transmitted to the second comparison module 218 and optionally to the classification module 222.

At step 913, after step 912, the second comparison module 218 estimates the second similarity score by comparing the aligned image in the visible domain and the synthesized image in the visible domain. To this end, the second comparison module 218 may apply the fifth model to the aligned image in the visible domain and to the synthesized image in the visible domain. The second similarity score is transmitted to the global comparison module 219.

At step 914, after step 912, the classification module 222 determines the second classification indicating a category among genuine and attack by applying the sixth model to the synthesized image in the visible domain. The determined category is transmitted to the decision module 221.

At step 915, after steps 911 and 913, the global comparison module 219 determines the first classification indicating a category among genuine and attack, based on the first similarity score and/or the second similarity score. The determined first classification is transmitted to the decision module 221.

At step 916, after steps 906, 908, 914 and 915, the decision module 221 determines the final decision representative of the liveness/genuineness of the target person in the thermal image 201 and image 203, as genuine or attack based at least on the first classification received from the global comparison module at step 915, and optionally based on one or several of the following:

- the information indicating whether a face is detected or not, received from the face detection module 213;
- the information indicating whether landmark is detected of not, received from the facial landmark detection module 214;
- the second classification received from the classification module 222;
- the third classification received from the thermal domain classification module 212.1; and/or
- the fourth classification received from the visible domain classification module 212.2.

At step 917, the final decision can be transmitted to an external entity, as previously described, or can be stored in the memory 220 of the presentation attack detection device 210.

The invention allows a robust PAD solution for all types of spoofs, including heated masks, while providing a solution for genuineness determination without additional sensor.

The invention is based on real-life PAs and benefits from a multi-channel decision, which avoids error, thus achieving robust PAD capability.

The example embodiments are described in sufficient detail to enable those of ordinary skill in the art to embody and implement the systems and processes herein described. It is important to understand that embodiments can be provided in many alternate forms and should not be construed as limited to the examples set forth herein.

**Claims**

1. A presentation attack detection method comprising:

      - receiving (901) at least one thermal image (201) from a thermal camera (200);
      - receiving (902) at least one image (203) in the visible domain from a camera (202) different from the thermal camera;
      - determining (903) whether a face of a target person is detected in the thermal image or not, and whether a face of the target person is detected in the image in the visible domain or not;
      - if the face of the target person is detected in both the thermal image and the image in the visible domain, determining (915) a first classification indicating whether the target person is genuine or not, based on at least one comparison (911; 913) between the image in the visible domain and the thermal image;
      - determining (916) a final decision representative of the genuineness of the target person, based at least on the determined first classification.

2. The method according to claim 1, further comprising performing (912) a domain translation of the thermal image (201) to obtain a synthesized image in the visible domain, and wherein the first classification is obtained based on at least a comparison between the image in the visible domain and the synthesized image.

3. The method according to claim 2, wherein determining the first category comprises:

      - evaluating (911) a first similarity score based on a first comparison between the image in the visible domain (203) and the thermal image (201);
      - evaluating (912) a second similarity score based on a second comparison between the image in the visible domain and the synthesized image;
      - determining (915) the first classification based on the first similarity score and the second similarity score.

4. The method according to claim 2 or 3, wherein the method further comprises determining (914) a second classification indicating whether the target person is genuine or not based on the synthesized image in the visible domain, and wherein the final decision is further based on the second classification.

5. The method according to one of claims 2 to 4, further comprising performing (909) a first canonical face alignment of the image (203) in the visible domain to obtain a aligned image in the visible domain and performing (910) a second canonical face alignment on the thermal image (201) to obtain a aligned thermal image, and wherein the first classification is obtained based on at least one comparison between the aligned image in the visible domain and the aligned thermal image.

6. The method according to one of claims 2 to 5, wherein the domain translation is performed (912) by applying a model (301), the model being arranged for determining an image in the visible domain for a thermal image received as input.

7. The method according to claim 6, wherein the model (301) is arranged to perform super resolution to receive thermal images with a first resolution as input, and to output an image in the visible domain with a second resolution being higher than the first resolution.

8. The method according to claim 6 or 7, wherein the model (301) has an encoder-decoder structure based on a pyramidal architecture.

9. The method according to one of claims 6 to 8, comprising a preliminary step of training (841) the model (301) using a generative adversarial network, wherein the generative model is trained by a discriminator (324), using at least one adversarial loss function (404; 406).

10. The method according to one of claims 6 to 8, wherein the model (301) is trained by supervised learning on a set of training data comprising thermal images having several first resolutions associated with reference images in the visible domain having a second resolution, the second resolution being higher than the first resolutions.

11. The method according to one of the preceding claims, further comprising, if the face of the target person is detected (903) in the thermal image (201), determining (906) a third classification indicating whether the target person is genuine or not by applying a model to the thermal image, the model being arranged to determine the third classification when receiving an input thermal image, and wherein the final decision is further based on the third classification.

12. The method according to one of the preceding claims, further comprising, if the face of the target person is detected (903) in the image (203) in the visible domain, determining (907) a fourth classification indicating whether the target person is genuine or not by applying a model to the image in the visible domain, the model being arranged to determine the fourth classification when receiving an input image in the visible domain, and wherein the final decision is further based on the fourth classification.

13. A computer program comprising instructions arranged for implementing the method according to one of the preceding claims, when said instructions are executed by a processor.

14. A presentation attack detection device (210) comprising:

- a first receiving interface (231) arranged for receiving at least one thermal image (201) from a thermal camera (200);
- a second receiving interface (232) arranged for receiving at least one image (203) in the visible domain from a camera (202) different from the thermal camera;
- a face detection module (213) configured to determine whether a face of a target person is detected in the thermal image or not, and whether a face of the target person is detected in the image in the visible domain or not;
- a comparison module (219) configured to, if the face of the target person is detected in both the thermal image and the image in the visible domain, determine a first classification indicating whether the target person is genuine or not, based on at least one comparison between the image in the visible domain and the thermal image;
- a decision module (221) configured to determine a final decision representative of the genuineness of the target person, based at least on the determined first classification.

[FIG. 1]

100.1

100.2

100.3

[FIG. 2]

[FIG. 3]

[FIG. 4]

316

Reference Visible
$x_{vis}$

320

$x_{vis}^{SR}$
Synthetic Visible

Discriminators

324

404
Global
Discriminator

Local
Discriminator
406

1 2 3 4

[FIG. 5]

501

502

503

[FIG. 6]

601

602

[FIG. 7]

701

702

703

[FIG. 8]

Europäisches Patentamt
European Patent Office
Office européen des brevets

**EUROPEAN SEARCH REPORT**

**Application Number**

**EP 24 30 5148**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 536 843 A (UNIV SHANGHAI) 22 October 2021 (2021-10-22) * paragraph [0001] – paragraph [0023]; figures 1, 2 * | 1,11-14 | INV. G06V10/82 G06V40/40 |
| A | KHAWLA MALLAT: "Robust Face Authentication Based on Dynamic Quality-weighted Comparison of Visible and Thermal-to-visible images to Visible Enrollments", 2019 22TH INTERNATIONAL CONFERENCE ON INFORMATION FUSION (FUSION), [Online] 1 July 2019 (2019-07-01), pages 1-8, XP093160348, DOI: 10.23919/FUSION43075.2019.9011432 ISBN: 978-0-9964527-8-6 Retrieved from the Internet: URL:https://www.eurecom.fr/fr/publication/ 5956/download/sec-publi-5956.pdf> [retrieved on 2024-05-08] * abstract * * Section III; figure 2 * | 1-14 | |
| A | ANGHELONE DAVID ET AL: "ANYRES: Generating High-Resolution visible-face images from Low-Resolution thermal-face images", 2023 IEEE INTERNATIONAL CONFERENCE ON MULTIMEDIA AND EXPO (ICME), IEEE, 10 July 2023 (2023-07-10), pages 246-251, XP034407951, DOI: 10.1109/ICME55011.2023.00050 [retrieved on 2023-08-25] * abstract * * Section III * | 1-14 | TECHNICAL FIELDS SEARCHED (IPC) G06V |

-/--

The present search report has been drawn up for all claims

| Place of search | Date of completion of the search | Examiner |
|---|---|---|
| The Hague | 8 May 2024 | Boltz, Sylvain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

## EUROPEAN SEARCH REPORT

Application Number

EP 24 30 5148

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | David Anghelone: "Beyond the Visible: A Survey on Cross-spectral Face Recognition", arXiv (Cornell University), 6 May 2022 (2022-05-06), XP093156641, Ithaca DOI: 10.48550/arxiv.2201.04435 Retrieved from the Internet: URL:https://arxiv.org/pdf/2201.04435 [retrieved on 2024-05-08] * abstract * * Section 9 * * Sections 6-7 * ----- | 1-14 | |

TECHNICAL FIELDS SEARCHED (IPC)

The present search report has been drawn up for all claims

| Place of search | Date of completion of the search | Examiner |
|---|---|---|
| The Hague | 8 May 2024 | Boltz, Sylvain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 24 30 5148**

This annex lists the patent family members relating to the patent documents cited in the above-mentioned European search report.
The members are as contained in the European Patent Office EDP file on
The European Patent Office is in no way liable for these particulars which are merely given for the purpose of information.

**08-05-2024**

| Patent document cited in search report | Publication date | Patent family member(s) | Publication date |
|---|---|---|---|
| CN 113536843 A | 22-10-2021 | NONE | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- A Study on Presentation Attack Detection in Thermal Infrared. **KOWALSKI**. Sensors. Military University of Technology, July 2020, vol. 20, 3988